Europäisches Patentamt

European Patent Office

Office européen des brevets

(19)

(11) Publication number: **0 156 040**

A2

(12)

# EUROPEAN PATENT APPLICATION

(21) Application number: 84201062.1

(22) Date of filing: 05.06.80

(51) Int. Cl.⁴: **G 11 B 7/00**
G 11 B 7/013, G 11 B 7/24
G 11 B 7/26

(30) Priority: 13.06.79 US 48081

(43) Date of publication of application:
02.10.85 Bulletin 85/40

(84) Designated Contracting States:
AT BE CH DE FR GB IT LI LU NL SE

(60) Publication number of the earlier application
in accordance with Art. 76 EPC: 0 022 313

(71) Applicant: DISCOVISION ASSOCIATES
3300 Hyland Avenue
Costa Mesa California 92626(US)

(72) Inventor: Wilkinson, Richard L.
2007 West 232nd Street
Torrance California 90501(US)

(74) Representative: Arthur, George Fitzgerald et al,
KILBURN & STRODE 30, John Street
London WC1N 2DD(GB)

(54) A method and apparatus for recording on a movable recording medium by using a light beam, and the medium for such a recording.

(57) A video disc (11) is made by using the heat of a modulated focussed laser beam (13) as in prior proposals, but in order to get a more accurate record track, the medium on which the video disc record is made includes nitro-cellulose, or some other explosive material which is heated to its autoignition point when the heat in the focussed laser beam is above the critical level at which a pit is to be formed in the surface of the record.

Fig. 1

EP 0 156 040 A2

RECORDING MEDIUM, METHOD OF MAKING A RECORDING
OR A STAMPER OBTAINED BY USING THIS RECORDING MEDIUM,
AND RECORD CARRIER OR STAMPER MADE BY USING THIS METHOD

TITLE MODIFIED
see front page

This invention relates to records having a
surface carrying a track of irregularities containing
information to be recorded and read.

The invention has particular application
to video disc records carrying concentric or
spiral tracks of alternate plane portions and pits
or bumps as generally described for example in
British Patent Specification No. 1462791 and in
the Article " A Review of the MCA Disco-Vision
System" by Broadbent in " Information Display"
Volume 12, pages 12-19, published in April, 1976.
The invention is equally applicable to other
types of record for example computer storage
systems and memories.

In the past the information tracks have been
formed by focussing an intensity modulated write
beam of light from a laser onto the surface of the
disc to cause the bumps or pits or other
irregularities either by burning them into the
surface of the disc, or by exposing photo-resist
material, and an object of the invention is to
provide a novel method of forming the irregularities
still using a beam of intensity modulated radiation
but by a method enabling finer and cleaner
irregularities to be formed so that the information
can be more accurately recorded at a greater
density on the surface of the disc, the formation
being immediate without the necessity of a
subsequent developing process, and by a method
giving immediate monitoring with a read-after-write system enabling variation of the write process if any inaccuracy is detected.

In Philip's British Patent Specification No. 2005457 there is a disclosure of a disc on which an optical recording can be made, which disc consists of a transparent substrate 1, an intermediate auxiliary layer 2, and an information recording layer 3 on top of the auxiliary layer. The auxiliary can include an endothermal substance which can be triggered by the recording energy to release energy for removing the information layer 3 and thus producing local holes in it.

Thomson-Brandt's French Specification No. 2368779 teaches a substrate 1 , a metal layer 3, and an absorbing layer 2 on the outer surface of the metal layer 3 in which complete holes can be made during a recording to expose the surface of the metal layer 3 locally.

It is an object of the present invention to provide a method of making an optical recording consisting of a track of irregularities, the size of which can be accurately controlled to leave a recording which can be readily read while writing for monitoring purposes, and also can be readily reproduced for the manufacture of replicas.

According to the invention, the subject of Application No. 80301884.5 from which the present application has been divided, the write beam has such an intensity as to cause partial explosions at selected portions of a light abosrbing coating including explosive material where the beam impinges to form local irregularities in the form of upraised bumps.

0156040

In accordance with the present invention, the write beam may have a depth of focus and peak intensity such that the coating is selectively energised by the beam to induce spaced explosions within the selected portions of the coating on which the beam impinges so that the irregularities representative of the data signal are in the form of shallow pits extending only partway through the coating containing the explosive material. The invention includes the recorded disc itself in which the information track is in the form of pits in the coating containing explosion material which pits do not extend completely through the thickness of the coating.

It will be appreciated that since the irregularities in the form of partial pits, do not extend completely through the outer layer as taught in the prior art discussed above, it is possible to maintain accurate control over the recording process and to produce a recording which can be readily reproduced.

The size of the pit or bump can be accurately controlled and in fact tends to be smaller than the focussed spot of the beam of radiation, so that a very accurate information track can be formed.

With a beam spot 5000°A in diameter it is possible to produce a pit only 3000A° wide. The depth of the pit might be between 4000-6000A° deep so that it does not penetrate completely through the depth of a coating of perhaps 10000A° thickness.

Where a pit is required a beam energy of 20 milliwatts might be suitable, but where a partial explosion leaving a bump is required, a beam energy of 1 milliwatt may be sufficient. In a typical case the rate of movement of the disc in relation to the write beam might be such that each local area of the coating surface is subjected to the beam for no more than about 100 nanoseconds. Where bumps are formed in the coating a metallic layer may be subsequently deposited over the bumped surface of the coating.

Where the heat of the beam is used to cause the explosion in the explosive material, it may be necessary to include a dye so as to absorb the radiation and ensure that sufficient local heating occurs. Of course the coating material will be a poor thermal conductor for the same reason.

The coating may be deposited on the glass or other substrate by initially mixing the explosive material and a dye if one is required with a suitable solvent, which is then poured over the upper surface of the substrate which is then spun until a liquid coating with a uniform thickness is obtained and then until further spinning evaporates the solvent. The coating thickness can be controlled by choosing the viscosity of the solution and the angular velocity of spinning.

For master discs from which stampers can be taken for mass producing replicas, the substrate is likely to be glass with a highly polished surface and possibly with a thin metal layer between the glass and the coating. Then after recording the information as a track of irregularities a metal layer may be vacuum deposited on the surface by thermal evaporation followed by the electro plating of a thicker metal layer. The stamper so formed by the double metal layer can be removed for subsequent production of replicas.

Where a read-after-write disc is to be made , for example, in a home recording, the substrate is likely to be  a plastics material, for example  polymethyl-methacrylate which is fairly thin and flexible and has the explosive coating deposited on it. There may then be a disc shaped plastic protective layer positioned spaced from the recorded surface of the coating to define a cavity. The write beam of radiation can be directed either through the protective layer, or from the other side through the substrate, so that one or other must be transparent to the radiation.

A double-sided disc can be formed by having two substrates each with its explosive coating the coatings being back to back, so that the substrates form the respective exposed surfaces of the double disc. Then the substrates will have to be transparent to the write beam of radiation.

If the recording is to be in the form of bumps, rather than in the form of pits, then the coating including the explosive material may have a thin metallic layer over it before the recording is made, perhaps being between 100-200 A$^{\circ}$ thick. The intensity modulated recording beam of radiation can be directed either through such a thin metallic layer, or through the substrate, and in that case the heating of the coating locally to the auto-ignition point will be primarily by thermionic or photo-electric emission of electrons from the metallic layer so that a dye is not necessary in the coating.

The invention includes a method of making a record and a record whether made by such a method, or made from such a recording medium, or indeed from a stamper made from such a record.

The invention may be carried into practice in various ways, and certain embodiments will now be described by way of example, with reference to the accompanying drawings; in which

FIGURE 1 is a simplified block diagram of apparatus for recording a data signal on a record disc, and for recovering the signal therefrom to verify that it has been properly recorded;

FIGURE 2 is an enlarged plan view of a portion of the record disc depicted in FIGURE 1, showing the arrangement of pits or bumps representative of the recorded data signal;

FIGURE 3 is a cross-sectional view (not to scale) of a prior art photoresist recording medium after development;

FIGURE 4 is a cross-sectional view (not to scale) of a master recording disc of the present invention showing an information-bearing pit formed in
a special explosive coating;

FIGURE 5 is a cross-sectional view (not to scale)
of an alternative master recording disc of the present
application, showing an information-bearing bump formed
in the special explosive coating;

FIGURE 6 is a cross-sectional view ( not to scale)
of a direct-read-after-write recording disc having
a single recording surface, with information bearing
bumps formed therein; and

FIGURE 7 is a cross-sectional view (not to scale)
of a direct-read-after-write recording disc having
two recording surfaces, with information bearing
bumps be. ng shown in both surfaces.

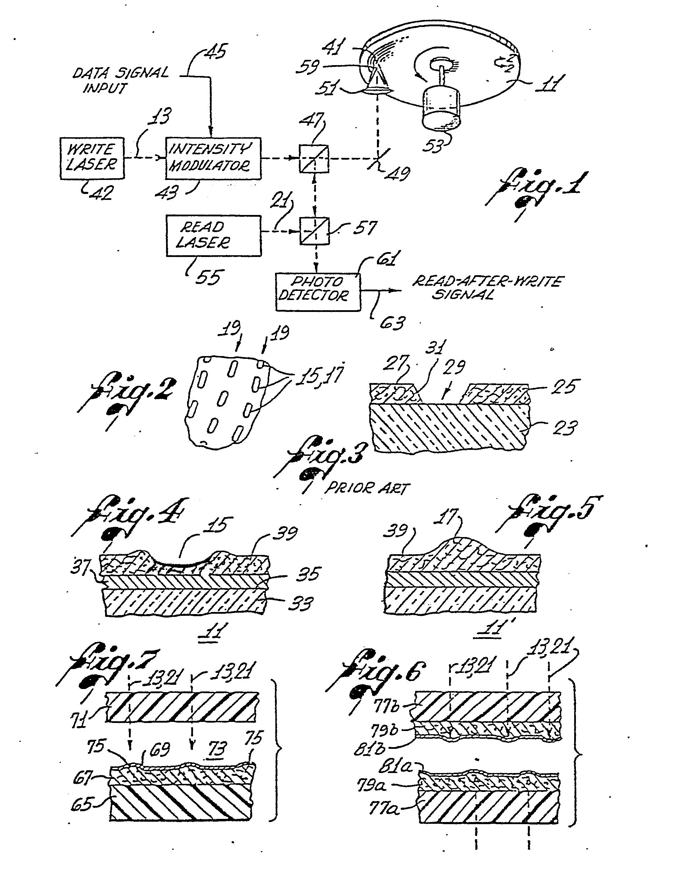

FIGURE 1 shows a master disc recording apparatus
for recording a frequency-modulated video signal or
digital signal, on a rotatable master recording disc
11. Such a master disc can be used to produce a
stamper for use in a moulding apparatus (not shown)
for producing disc replicas. The recording apparatus
operates to direct a write beam of light 13 from an
argon in laser 43 onto the disc, as the disc is rotated
at a prescribed angular velocity, the beam being
modulated in intensity according to a data signal to be
recorded. This forms a succession of microscopic
information-bearing pits 15 or bumps 17 (FIGURE 2),
arranged in a plurality of substantially circular
recording tracks 19 in a spiral or concentric circle
pattern on the disc.

The recording apparatus further operates to focus onto the disc a read beam of light 21 from a helium neon laser 55 operating at 6328 A$^{O}$, having a constant intensity, substantially less than the peak intensity of the write beam 13, to scan the successive pits 15 or bumps 17 immediately after they are formed by the write beam. This permits a continuous control of both the power level and focus of the write beam, so that the signal can be recorded properly over the entire disc.

FIGURE 3 is a simplified cross-sectional view (not to scale) of a known recording disc which includes a glass substrate 23 having a polished upper surface 25, and having a coating 27 of photoresist material sensitive for example to an intensity-modulated write beam of light as the disc is rotated. The photoresist coating is then suitably developed, to remove all of the material in the spaced, illuminated regions, yielding a master disc having a succession of spaced pits 29. The size of each pit in the photoresist coating cannot generally be made smaller than the 1/e$^{2}$ diameter of the diffraction-limited spot formed by the focused write beam.

The pits 29 are characterised by sharply-defined sidewalls 31 that are ragged and grainy in structure. This roughened structure, which is duplicated in the resultant stamper, can result in damage to the disc replicas during the moulding procedure.

The disc of FIGURE 4 includes a glass substrate 33 having a highly polished, planar surface 35 on its upper side, with a thin layer 37 of metallic material deposited thereon. Additionally, a special light-absorbing coating 39 is deposited on the metallic layer. The write beam of light 13 is transmitted through a medium of air adjacent the disc and focused to a diffraction-limited spot 41 on the outer surface of the special coating.

In accordance with the invention, the special coating 39 includes an explosive material and is highly absorptive of the intensity-modulated write beam of light 13, whereby as the disc 11 is rotated with respect to the beam, the coating is selectively heated by the beam to induce spaced explosions therein, forming corresponding irregularities, in the form of microscopic pits 15, representative of the data signal. The spaced pits are substantially free of any residue material and are free of sharp corners and roughened sidewalls, whereby the risk of damage to the disc replicas that are eventually produced is reduced, and whereby the signal-to-noise ratio of the data signals recovered from such disc replicas is improved. Additionally, the cross-sectional size of the pits can be made small relative to the diffraction-limited spot of the focused write beam, thereby further increasing the signal-to-noise ratio of the data signals that can be recovered from the disc replicas.

The metallic layer 37 is interposed between the substrate 33 and the information-bearing explosive coating 39 for two major purposes, one to improve the bonding of the coating material, and the other to provide increased reflectivity of the read beam of light 21, which scans the disc immediately after formation of the pits 15. Although the preferred metal for the layer 37 is titanium, there are other suitable metals, such as chromium and aluminium. In this embodiment, titanium is vacuum deposited by thermal evaporation onto the upper surface 35 of the glass substrate 33, to a thickness of approximately 500 $A^{o}$.

The explosive material included in the special light-absorbing coating 39 is a substance that will explode or undergo a rapid chemical reaction to produce gases whenever heated to its auto-ignition temperature. The coating has a low thermal conductivity so that only the portions of the coating on which the intensity-modulated write beam 13 actually impinges are heated to the critical temperature. Moreover, it is important that the gaseous products of the rapid chemical reaction do not condense back onto the coating or onto portions of the recording apparatus after they have cooled. Suitable explosive materials are nitrocellulose, trinitroaniline and trinitrotoluene

The write beam 13 is produced by a conventional argon ion laser which produces a beam having components at approximately 457, 488, and 514 nanometers. Accordingly, to be heated by the intensity-modulated write beam, the coating 39 must be absorptive of these wavelengths. Neither nitrocellulose nor trinitrotoluene is inherently highly absorptive of these wavelenths, so whenever these explosive materials are utilised, the coating further includes a suitable orange or red coloured dye that is highly absorptive of the wavelengths. The dye must be

.10.

color-stable and must be readily soluble with the explosive material used. The preferred dye is sold by American Color & Chemical Co. under the trademark AMPLAS ORANGE CR, but other suitable dyes include another dye sold by American Color & Chemical Co., this one under the mark ANAPLAST-SCARLET MM, and also 1-phenyl-azo-2-napthol and azobenzene-4-azo-2-napthol, sold by DuPont under the marks OIL ORANGE and OIL RED, respectively.

The special explosive coating 39 is deposited on the upper surface of the metallic layer 37 using a special process in which the explosive material and the dye, if required, are initially admixed with a suitable solvent. In the preferred process, ten parts (by weight) of nitrocellulose, three parts of AMPLAS ORANGE CR dye, and about 300-400 parts of the solvent cellosolve acetate, are combined to yield a solution having a viscosity of about 3-5 centipoise. Other suitable solvents for the explosive material and dye mixture include butyl acetate and amyl acetate.

The liquid solution is then poured on the upper surface of the metallic layer 37, and the coated substrate 33 and integral metallic layer are then spun at an angular velocity of about 1000 rpm until the solution has achieved a uniform thickness over the entire surface. Continued spinning at about 1000 rpm for about 20-30 seconds evaporates the cellosolve acetate completely, leaving the special coating 39 in the form of a solid solution bonded to the upper surface of the metallic layer.

The thickness of the coating 39 can be controlled by varying the viscosity of the solution and/or the spin speed. A final thickness of greater than 1 micron ensures that the pits 15 that are thereafter formed in the coating, will extend only partially into the top surface of the coating, as shown in FIGURE 4.

The intensity modulated write beam 13 is focused onto the top surface of the coating from above the disc. Because the depth of focus of the beam is limited to about .2 microns, however, the focused beam begins to diverge a short distance beneath the surface. As a result, the intensity of the beam is sufficiently high to heat the explosive material to its autoignition temperature only within about .4 - .6 microns of the upper surface.

Microscopic pits having a width of about .3 microns can be formed by a write beam 13 that is focused to a $1/e^2$ diameter of about .5 microns and that has a total power of about 20 milliwatts. The write beam impinges on a selected location on the disc 11 for a time period of less than about 100 nanoseconds.

After the pattern of microscopic pits 15, has been formed, a metallic overlayer (not shown) is deposited onto the recorded coating 39. The metallic overlayer is then removed from the underlying disc to produce a stamper which, in turn, is used in a moulding apparatus to produce replicas of the master disc. That is the subject of the Divisional Application

Figure 5 is a simplified cross-sectional view of an alternative master disc 11' in accordance with the parent . invention. The disc is identical in structure to the disc 11 of Figure 4 except that it is adapted to absorb less energy from the intensity-modulated write beam of light 13. For a coating 39' having the same composition as that specified for the coating of FIGURE 4, the intensity modulated write beam 13 need have a power level of only about one milliwatt. As a result, there is sufficient energy to induce only incomplete explosions in the spaced areas on the coating that are illuminated by the scanning write beam, whereby an upraised bump 17 is formed at each such area due to trapping of gases produced in the rapid chemical reaction that occurs in the coating when heated by the write beam. Metallic stampers can be formed from this master disc.

In another embodiment ( not shown), the special explosive coating is overlayed by a thin, metallic coating, having a thickness of about 100-200 $A^o$, before the disc is scanned by the intensity-modulated write beam 13. Like the embodiment of FIGURE 5, only partial explosions are induced in the explosive coating, producing upraised bumps therein and corresponding upraised bumps in the overlaying metallic coating. In this embodiment, the write beam preferably has a power level of about 2 milliwatts and is focused onto the overlaying metallic layer from above the disc, in which case the spaced, partial explosions in the underlying coating are induced by both thermionic and photoelectric emission of electrons from the metallic layer into the coating, and the explosive coating need not include a dye. Alternatively, the write beam can be focused onto the coating from below, through the substrate.

The operation of the apparatus of Figure 1 will now be briefly described. The write beam 13 is modulated in an intensity modulator 43 controlled by data on the liner 45. The intensity of the modulated beam is alternately greater than and less than a threshold at which the explosive material in the coating 39 will reach its auto-ignition temperature.

The modulated beam 13 passes through a first beam splitter 47 to a mirror 49, where it is reflected and transmitted to a low numerical operative lens 51, which focuses it to the diffraction-limited spot 41 on the disc 11. The disc is rotated by a motor 53, and the mirror and the objective lens are mounted on a carriage (not shown) that is movable radially so that the data signal can be recorded in a plurality of substantially circular recording tracks 19.

The read beam of light 21, which is utilised in reading the data signal immediately after it has been recorded on the disc, is produced by a read laser 55. The beam has a constant intensity, substantially less than that of the write beam 13, The read laser can advantageously comprise a helium neon laser, which produces a beam having a wavelength of approximately 6328 A$^{\circ}$.

The read beam 21 passes through a second beam splitter 57 to the first beam splitter 47, where it is reflected and combined with the write beam 13. Thereafter, it follows essentially the same path as the write beam until it is focussed to a diffraction limited spot 59 on the disc 11. The two beams are aligned such that their respective spots 41 and 59 are approximately 5 microns apart and at a common radius, with the write spot 41 in the lead .

The read beam of light 21 has a constant intensity that is insufficient to heat the explosive coating to its auto-ignition temperature, and after reflection is modulated in intensity by the recorded pattern of pits or bumps.

From the second beam splitter 57, the reflected beam is transmitted to a photodetector 61, which demodulates the beam and produces on a line 63a corresponding read-after-write electrical signal for continuously controlling both the power level and the focus of the write beam, whereby the data signal can be properly recorded over the entire surface of the disc 11.

The invention can also be used for making

.15.

direct-read-after-write ( i.e. "DRAW") discs, which are single recordings that are not used for purposes of relication and may be made for example on a home recorder. The explosive coating is on an interior, protected surface of the disc, and the substrate is thin and resilient. The information bearing surface irregularities can be in the form of pits or bumps.

FIGURE 6 depicts one embodiment of such a DRAW disc having one information-bearing-surface. A plastic substrate 65 of polymethylmethacrylate has a light absorbing coating that includes an explosive layer 67 and an overlaying thin metallic layer 69. Additionally, a disc-shaped plastic protective layer 71 is spaced approximately .020 inches above the metallic layer, to form a closed annular cavity 73 that protects the metallic layer from duct and abrasion.

The explosive layer 67 has a thickness of about 10,000 A$^{\circ}$, so that any effects the solvent might have on the underlying plastic substrate will not affect the upper portion of the coating, where information bearing bumps 75 are formed by partial explosions in the underlying portions of the explosive layer 67. The write beam can impinge on the metallic layer through the underlying substrate 65 or from above, through the spaced protective layer 71. Since the explosive layer is energised not by absorption of the write beam, but rather by thermionic or photoelectric emission of electrons from the metallic layer, it is not necessary for the coating to include a dye.

The read beam of light 21, which trails the write beam 13 by a prescribed amount, is reflected by the metallic layer 69 in accordance with the pattern of bumps 17 formed therein.

FIGURE 7 shows a DRAW disc with two information bearing surfaces.  The disc includes two plastic substrates 77$\underline{a}$ and 77$\underline{b}$ with a light-absorbing explosive layer 79$\underline{a}$ or 79$\underline{b}$ on each substrate, and an overlaying metallic layer 81$\underline{a}$ or 81$\underline{b}$.  The metal layers are back-to-back so that the uncoated faces of the substrates are the exposed faces of the combined disc.  The substrates must be transparent to the intensity-modulated write beam 13.  The explosive layer need not include a dye.

The present invention provides a recording medium enabling surface pits  to be formed therein without the formation of any substantial residue material or rough edges.  Data signals can be recorded in the medium with a very high signal-to-noise ratio.

0156040

## CLAIMS

1. A method of recording a data signal on a movable recording medium of the type having a substrate and a light-absorbing coating overlaying the substrate, said coating including an explosive material; said method comprising the steps of:

moving the recording medium in a prescribed fashion;

modulating the intensity of a write beam of light in accordance with the data signal to be recorded; and

directing the intensity-modulated write beam of light onto the medium as the medium is moved with respect thereto;

characterized in that said beam has a depth of focus and peak intensity selected such that the coating is selectively energized by the beam to induce spaced, explosions within the selected portions of the coating on which the beam impinges, whereby corresponding surface irregularities, representative of the data signal, are formed in the outer surface of the coating, said irregularities being shallow pits extending only part way through said coating.

2. A method as defined in Claim 1, wherein the pits extend from the surface of the coating to at least a depth of 1,000 Å.

3. A method as defined in either of Claims 1-2, wherein the beam is focussed to a spot having a diameter of less than about one micron; and the speed at which the medium is moved relative to the intensity-modulated beam is selected such that the beam impinges on selected portions of the coating for less than about 100 nanoseconds, whereby the explosions induced thereby are substantially confined to such selected portions and are controlled to penetrate only part way through said coating.

4.    A method of producing a metallic stamper for use in a moulding apparatus for forming recording disc replicas, said method comprising recording a data signal on a medium by a method as claimed in any of Claims 1-3, depositing an outer layer of metallic material on the coated substrate, after the surface irregularities have been formed therein;   and removing the outer metallic layer from the underlaying coated substrate, to produce the metallic stamper.

5.    An optical recording medium for use in the methods of any of Claims 1-4, comprising; a substrate and a thin light-absorbing coating overlying the upper surface of the substrate, said coating including an explosive material capable of being selectively energized to induce explosions part way through the coating and having a uniform thickness of about 10,000 $\overset{o}{A}$ or less.

6.    An optical recording medium as defined in Claim 5, wherein said explosive material comprises nitro-cellulose, or trinitroaniline, or trinitrotoluene.

7.    An optical recording medium as defined in either of Claims 5 and 6, in which the upper surface of the substrate is a metallic or other light-reflecting surface.

8. An optical recording medium as defined in Claim 6, wherein the light-reflective upper surface is provided by a titanium layer with a thickness of less than about 200 $\overset{o}{A}$.

9. An optical recording medium as defined in any of Claims 5-8, wherein the light-absorbing coating further includes a dye material in solution with the explosive material.

10. An optical recording medium as defined in any of Claims 5-9, wherein the light-absorbing coating has an information-bearing succession of pits extending partially into its thickness.

11. An optical recording medium as defined in Claim 10, wherein the pits have widths of about 0.3 microns.

12. An optical recording medium as defined in any of Claims 5-11, wherein the outer surface of the light-absorbing coating includes irregularities departing at least about 1,000 $\overset{o}{A}$ from the regular surface.

13. An optical recording medium as claimed in any of Claims 5-12, further comprising a thin metal layer over the outer surface of the light-absorbing coating.

14. An optical recording medium as claimed in any of Claims 5-13, further including a protective disc or other means disposed in spaced, confronting relationship with said light-absorbent coating, an annular cavity being formed therebetween; either said substrate or said protective means being transparent to a write beam of radiation.

15.  A recording apparatus for carrying out the method of any of Claims 1-4, comprising a rotatable disc as claimed in any of Claims 5-14, on which a data signal can be recorded; means for rotating the disc at a prescribed angular velocity; means for producing a write beam of light, modulated in intensity in accordance with a data signal to be recorded on the disc; and carriage means for focussing the write beam onto the disc as the disc is rotated with respect thereto, said carriage means further operating to move the point of impingement of the write beam on the disc in a radial direction, wherein the data signal is recorded on the disc in a plurality of substantially circular and concentrically arranged recording tracks; said disc including a substrate, and an effective amount of a light-absorbing coat overlaying said substrate, said coating including an explosive material and having a uniform thickness of less than about 10,000 $\overset{\circ}{A}$, wherein the coating is selectively energised by the intensity-modulated write beam to induce spaced explosions in the upper portion thereof, whereby corresponding irregularities, representative of the data signal, are formed in the outer surface of the coating.

0156040

DATA SIGNAL INPUT

_45_

_41_
_59_
_51_
_11_
_53_

_13_

WRITE LASER
_42_

INTENSITY MODULATOR
_43_

_47_

_49_

*fig.1*

_21_

READ LASER
_55_

_57_

PHOTO DETECTOR
_61_

READ-AFTER-WRITE SIGNAL
_63_

_19_  _19_

_15,17_

*fig.2*

_27_  _31_  _29_
_25_
_23_

*fig.3*

PRIOR ART

*fig.4*

_15_  _39_
_37_
_35_
_33_
_11_

*fig.5*

_39_  _17_
_11'_

*fig.7*
_13,21_  _13,21_
_71_
_75_  _69_  _73_  _75_
_67_
_65_

*fig.6*
_13,21_  _13,21_
_77b_
_79b_
_81b_
_81a_
_79a_
_77a_